# EUROPÄISCHE PATENTSCHRIFT

(11) **EP 2 437 964 B1**
(45) Veröffentlichungstag und Bekanntmachung des Hinweises auf die Patenterteilung: **11.12.2013**
(21) Anmeldenummer: 10722644.1
(22) Anmeldetag: 07.06.2010
(51) Int. Cl.: B60W 30/06, B62D 15/02

(54) **VERFAHREN ZUM DURCHFÜHREN EINES ZUMINDEST SEMI-AUTONOMEN PARKVORGANGS EINES FAHRZEUGS UND PARKASSISTENZSYSTEM FÜR EIN FAHRZEUG**
METHOD FOR CARRYING OUT AN AT LEAST SEMI-AUTONOMOUS PARKING MANEUVER FOR A VEHICLE, AND A PARKING ASSISTANCE SYSTEM FOR A VEHICLE
PROCÉDÉ POUR EXÉCUTER AU MOINS UNE PROCÉDURE DE STATIONNEMENT SEMI-AUTONOME D'UN VÉHICULE ET SYSTÈME D'AIDE AU STATIONNEMENT POUR UN VÉHICULE

(30) Priorität: 05.06.2009 DE 102009024083
(43) Veröffentlichungstag der Anmeldung: 11.04.2012
(73) Patentinhaber: Valeo Schalter Und Sensoren Gmbh, 74321 Bietiheim-Bissingen (DE)
(72) Erfinder: JECKER, Nicolas, 73730 Esslingen (DE); GRIMM, Oliver, 74223 Flein (DE); GEIGER, Tobias, 74321 Bietigheim-Bissingen (DE)
(74) Vertreter: Pothmann, Karsten
(86) Internationale Anmeldenummer: PCT/EP2010/003407
(87) Internationale Veröffentlichungsnummer: WO 2010/139486

(56) Entgegenhaltungen:
- EP-B1- 1 755 921

## Beschreibung

Die Erfindung betrifft ein Verfahren zum Durchführen eines zumindest semi-autonomen Parkvorgangs eines Fahrzeugs mittels eines Parkassistenzsystems, wobei Umgebungsbedingungen des Fahrzeugs bei einer Vorbeifahrt an einer potentiellen Parklücke erfasst und eine Parkbahn abhängig von den Umgebungsbedingungen und der Parklücke bestimmt wird. Des Weiteren betrifft die Erfindung ein Parkassistenzsystem für ein Fahrzeug.

Beim Einparken in Parklücken kann es vorkommen, dass nicht nur die die Parklücke begrenzenden Komponenten an sich kollisionskritisch sein können, sondern dass sich auch außerhalb der Parklücke den Parkvorgang behindernde Hindernisse befinden können.

Aus der EP 1 755 921 B1 ist ein Verfahren und eine Vorrichtung zur Unterstützung eines Einparkvorgangs für ein Fahrzeug bekannt. Mittels einer Sensoranordnung am Fahrzeug wird die Parklücke während eines Vorbeifahrens des Fahrzeugs an der Parklücke erfasst, wobei während des Vorbeifahrens des Fahrzeugs an der Parklücke ein Abstand zu einem Hindernis auf der der Parklücke abgewandten Längsseite des Fahrzeugs gemessen wird. Unter Berücksichtigung zumindest dieses gemessenen Abstands zu dem Hindernis auf der der Parklücke abgewandten Längsseite des Fahrzeugs wird eine von dem Fahrzeug während des Einparkvorgangs zu verfolgende Einparkbahn ermittelt. Der Einparkvorgang soll in einem Zug durchgeführt werden. Eine potentielle Kollision des Fahrzeugs mit dem auf der der Parklücke abgewandten Längsseite angeordneten Hindernis wird dem Fahrer signalisiert und der Fahrer kann den Einparkvorgang vor der Kollision abbrechen.

Bei dem bekannten Verfahren wird somit eine Einparkbahn vorgegeben, die nicht dahingehend konzipiert ist, dass sie eine Kollision zu einem außerhalb der Parklücke angeordneten Hindernis ausschließen kann. Wird bei dem einzügigen Einparken eine derartige Situation hervorgerufen, muss der Einparkvorgang quasi abgebrochen werden. Dies ist wenig nutzerfreundlich und nicht komfortabel, da sich der Fahrer bereits darauf eingestellt hat, dass sein Fahrzeug in die Parklücke eingeparkt werden kann.

Es ist Aufgabe der vorliegenden Erfindung, ein Verfahren zum Durchführen eines zumindest semi-autonomen Parkvorgangs eines Fahrzeugs sowie ein Parkassistenzsystem bereitzustellen, bei welchem bzw. mit welchem ein Parkvorgang, bei dem auch im nahen Umfeld außerhalb der Parklücke und nicht die Parklücke begrenzende Hindernisse vorhanden sind und dennoch bei diesen Gegebenheiten ein nutzerfreundliches und komfortables Durchführen des Parkvorgangs ermöglicht wird.

Diese Aufgabe wird durch ein Verfahren, welches die Merkmale nach Anspruch 1 aufweist, und ein Parkassistenzsystem, welches die Merkmale nach Anspruch 15 aufweist, gelöst.

Bei einem erfindungsgemäßen Verfahren wird ein zumindest teilweise semi-autonomer Parkvorgang eines Fahrzeugs in eine Parklücke durchgeführt, wobei dies mittels eines Parkassistenzsystems des Fahrzeugs durchgeführt wird. Bei dem Verfahren werden Umgebungsbedingungen des Fahrzeugs bei einer Vorbeifahrt an einer potentiellen Parklücke vor dem Durchführen eines eigentlichen Parkvorgangs erfasst und gegebenenfalls eine geeignete Parklücke erkannt. Ist eine Parklücke als geeignet erkannt, wird eine Parkbahn abhängig von den Umgebungsbedingungen, die zumindest ein parklückenexternes und die Parklücke nicht direkt begrenzendes Hindernis umfassen, und Kenngrößen der Parklücke selbst bestimmt. Der Parkvorgang wird in mehreren Zügen durchgeführt und zumindest ein mit einem autonomen Lenkeingriff durchfahrener Zug wird in seinem Verlauf abhängig von einem parklückenexternen und die Parklücke nicht direkt begrenzenden Hindernis bestimmt. Insbesondere werden diesbezüglich Umgebungsbedingungen berücksichtigt, welche außerhalb der Parklücke um das Fahrzeug herum gegeben sind und den Parkvorgang dahingehend beeinträchtigen, dass die Parkbahn mit diesen Umgebungsbedingungen unterschiedlich zu der Parkbahn bestimmt wird, welche ohne diese außerhalb der Parklücke und die Parklücke nicht begrenzenden Umgebungsbedingungen bestimmt werden würde.

Bei einem semi-autonomen Parkvorgang ist es dem Fahrer zugeteilt, dass er Gas gibt und bremst. Ein Lenken und somit ein Einschlagen der lenkbaren Räder des Fahrzeugs wird automatisch und somit fahrerunabhängig durchgeführt oder das Lenken wird durch den Fahrer durchgeführt und das elektronische Parkassistenzsystem informiert auf Grundlage einer von dem System bestimmten Parkbahn den Fahrer durch akustische und/oder optische und/oder haptisch wahrnehmbare Signale, welche Lenkaktionen er auszuführen hat.

Durch das Durchführen des Parkvorgangs in mehreren Zügen ist auch die Parkbahn mehrzügig zusammengesetzt. Ein Verlauf des zumindest einen mit einem autonomen Lenkeingriff durchfahrenen Zuges ist insbesondere durch die Länge dieses Zuges und dessen Geometrie, die beispielsweise durch Bahnbögen und diese wiederum durch die Krümmungsrichtung und die Krümmung an sich gekennzeichnet sein können, charakterisiert.

Mit dem Verfahren wird es somit möglich, dass auch aufgrund von schwierigen Umgebungsbedingungen außerhalb der Parklücke ein komfortables und nutzerfreundliches Durchführen eines Parkvorgangs ermöglicht ist. Die Parkbahn wird vorzugsweise somit bereits zu Beginn des Parkvorgangs unter Berücksichtigung der Umgebungsbedingungen so bestimmt, dass ein kollisionsfreies Einparken oder Ausparken gewährleistet werden kann. Es ist daher nicht wie im Stand der Technik die Einschränkung gegeben, dass zunächst ein Parkvorgang begonnen und gegebenenfalls aufgrund einer zu befürchtenden Kollision wieder abgebrochen werden muss. Genau dies kann mit der vorliegenden Erfindung vermieden werden, so dass eine wesentlich nutzerfreundlichere und komfortablere Durchführung des Parkvorgangs gewährleistet ist. Insbesondere wird also die Parkbahn vor dem Starten des Parkvorgangs dahingehend bestimmt, dass auch ein kollisionsfreies Einparken zu den fahrzeugnahen und außerhalb der Parklücke angeordneten Hindernissen und die Parklücke primär nicht begrenzenden Hindernisse in mehreren Zügen möglich ist. Insbesondere umfassen die Umgebungsbedingungen somit Hindernisse außerhalb der Parklücke und die Parklücke nicht direkt einschränkende Begrenzungen, so dass diese Hindernisse zwar relativ fahrzeugnah sind und eine Planung der Parkbahn erfordern, die unterschiedlich zu der ist, als wenn diese parklückenexternen Hindernisse nicht vorhanden wären.

Darüber hinaus sind diese den Umgebungsbedingungen zuzurechnenden parklückenexternen Hindernisse nicht von dem Fahrzeug einfach und problemlos überfahrbar. Daher sind derartige Hindernisse beispielsweise Wände, andere Fahrzeuge, Begrenzungspfosten oder dergleichen. Nicht ohne Weiteres zu diesen Hindernissen zu zählen sind niedrige bzw. bodennahe Hindernisse, die vom Fahrzeug überfahren werden könnten, wie dies beispielsweise bei Bordsteinen der Fall ist. Bei derartigen Hindernissen kann insbesondere vorgesehen sein, dass sie durch das Parkassistenzsystem, insbesondere durch ein oder mehrere Sensoren des Parkassistenzsystems erfasst und erkannt werden können. Abhängig von der spezifischen Ausgestaltung eines derartigen Hindernisses kann dann entschieden werden, ob es den Parkvorgang beeinträchtigt oder nicht und somit gegebenenfalls überfahren werden kann. Gerade bei Bordsteinen kann diesbezüglich vorgesehen sein, dass abhängig von einer feststellbaren Höhe und/oder Kontur erkannt werden kann, ob dieser beim Parkvorgang problemlos überfahren werden kann oder ob eine Kategorie eines derartigen Bordsteins vorliegt, mit dem eine Kollision oder ein Überfahren vermieden werden sollte. Dies ist insbesondere gegebenenfalls dann der Fall, wenn der Bordstein relativ hoch und mit einer relativ scharfen Kante am Übergang zwischen Oberseite und Seitenwand ausgebildet ist. Ist dieser Übergang abgerundet oder relativ flach, so kann diesbezüglich ein Überfahren möglich sein, ohne dass Beschädigungen am Fahrzeug auftreten können.

Gerade bei derartigen Hindernissen, die abhängig von ihrer Ausgestaltung nicht überfahren werden sollten oder aber auch überfahren werden können, kann vorgesehen sein, dass auch eine Bildaufnahme durch eine im für den Menschen sichtbaren Spektralbereich sensitive Detektoreinheit, beispielsweise eine optische Kamera, vorgesehen ist und dies dem Fahrer angezeigt wird. Gegebenenfalls kann dem Fahrer auf Mitteilung durch das Parkassistenzsystem die Entscheidung übertragen werden, ob ein Überfahren dieses Hindernisses durchgeführt werden soll oder nicht. Abhängig von dieser Entscheidung durch den Fahrer kann dann das System die spezifische und kollisionsfreie Parkbahn bestimmen.

Vorzugsweise werden zumindest zwei Züge des Parkvorgangs bzw. der Parkbahn mit einem autonomen Lenkeingriff durchfahren und es wird zumindest einer der Züge in seinem Verlauf abhängig von den spezifischen, parklückenexternen Hindernissen bestimmt. Durch diese Ausgestaltung wird eine Variabilität in der Bestimmung der Parkbahn dahingehend erreicht, dass unterschiedlichsten Situationen betreffend die vorherrschende Parklücke und die Umgebungsbedingungen Rechnung getragen werden kann. Die Parkbahn kann dadurch im Hinblick auf ihre Bestimmung nochmals variabler und flexibler gestaltet werden, so dass das kollisionsfreie Einparken nochmals verbessert werden kann. Insbesondere ist es durch diese zusätzliche Erhöhung der Gestaltungsmöglichkeit der Parkbahn gewährleistet, dass die Anzahl von Parklücken mit kritischen Umgebungsbedingungen, in die tatsächlich nicht eingeparkt werden kann, nochmals deutlich reduziert wird.

Vorzugsweise wird ein mit einem autonomen Lenkeingriff durchfahrener Zug der Parkbahn in seinem Verlauf abhängig von den spezifischen, parklückenexternen Hindernissen bestimmt und ein mit einem autonomen Lenkeingriff durchfahrener weiterer Zug wird abhängig von dem anderen Zug bestimmt. Auch dadurch wird die Variabilität und Flexibilität der Gestaltung einer Parkbahn erhöht und das Einparken in unterschiedliche Parklücken mit für das Durchführen des Parkvorgangs kritischen parklückenexternen Umgebungsbedingungen wird dadurch erhöht. Insbesondere kann vorgesehen sein, dass der mit einem autonomen Lenkeingriff durchfahrene weitere Zug zumindest oder nur abhängig von dem anderen Zug, bei dem zur Verlaufsbestimmung die genannten parklückenexternen und die Parklücke nicht direkt begrenzenden Hindernisse berücksichtigt werden, bestimmt wird.

Vorzugsweise wird als Parkvorgang ein Rückwärtseinparken des Fahrzeugs in eine Parklücke durchgeführt. Insbesondere wird das Fahrzeug in eine Querparklücke eingeparkt. Unter einer Querparklücke wird eine derartige seitlich zu einer Fahrbahn angrenzende Abstellfläche für ein Fahrzeug verstanden, deren Längsachse in einem Winkel größer 0° und kleiner 180° zur Längsachse der Fahrbahn orientiert ist. Vorzugsweise werden diesbezüglich Abstellflächen verstanden, deren Längsachse in einem Winkel zwischen 30° und 150° zur Längsachse der Fahrbahn verläuft. Insbesondere seien als Parklücken derartige genannt, deren Längsachse senkrecht zur Längsachse der Fahrbahn orientiert ist.

Insbesondere ist eine im Hinblick auf eine den ungehinderten Parkvorgang behindernde Umgebungsbedingung mit einem parklückenexternen und die Parklücke nicht mittelbar begrenzenden Hindernis dadurch gekennzeichnet, dass eine an die Parklücke anschließende Fahrbahn in Fahrtrichtung durch ein erstes Hindernis begrenzt wird und/oder auf der der Parklücke abgewandten Längsseite des Fahrzeugs, wenn dieses beispielsweise vor dem Starten des Parkvorgangs noch auf der Fahrbahn steht, durch ein zweites Hindernis begrenzt wird. Es sind also dahingehend spezifische Umgebungsbedingungen geschaffen, dass außerhalb der Parklücke nach vorne betrachtet von dem einzuparkenden Fahrzeug aus und /oder auf der der Parklücke abgewandten Längsseite des Fahrzeugs ein oder mehrere Hindernisse positioniert sein können, die einen einschränkenden Effekt auf den Parkvorgang im Vergleich zu einem Parkvorgang haben, wenn diese Hindernisse nicht vorhanden wären.

Es kann ein erstes Hindernis beispielsweise eine Wand in einer Tiefgarage oder einer sonstigen Parkgarage sein. Darüber hinaus kann ein derartiges Hindernis auch ein Begrenzungspfosten eines großflächigen Parkplatzes mit einer Vielzahl von Parklücken, oder aber auch ein anderes Fahrzeug oder dergleichen sein. Grundsätzlich kann dieses erste Hindernis insbesondere so konzipiert sein, dass es von dem zu parkenden Fahrzeug nicht überfahren werden kann oder nicht überfahren werden sollte. Entsprechendes gilt für das zweite Hindernis, welches im Hinblick auf die beispielhaft und nicht abschließend zu verstehenden konkreten Nennungen entsprechend ausgebildet sein kann.

Das Verfahren ist insbesondere für einen mehrzügigen Einparkvorgang, insbesondere einen rückwärtigen Einparkvorgang, vorgesehen.

Vorzugsweise ist im Hinblick auf die Beurteilung von derartig einschränkenden Umgebungsbedingungen eine Ausgestaltung vorgesehen, dass das System diese kritischen Umgebungsbedingungen mit den parklückenexternen Hindernissen dahingehend beurteilen kann, ob ein erster Abstand des ersten, Hindernisses zu einer dem ersten Hindernis zugewandten seitlichen Begrenzung der Parklücke kleiner oder gleich dem 1,5 fachen der Länge des zu parkenden Fahrzeugs, insbesondere kleiner der Länge des Fahrzeugs ist.

Darüber hinaus ist diesbezüglich in weiterer vorteilhafter Ausgestaltung vorgesehen, dass ein zweiter Abstand des zweiten Hindernisses zu einer dem zweiten Hindernis zugewandten und die Parklücke von der Fahrbahn trennenden Begrenzung kleiner dem 1,5 fachen der Länge des zu parkenden Fahrzeugs, insbesondere kleiner der Länge des Fahrzeugs ist. Gerade derartig relativ nah zum zu parkenden Fahrzeug postierte Hindernisse schränken den Freiraum beim Durchführen des Parkvorgangs im Vergleich zu deren Nicht-Vorhandensein wesentlich ein. Um auch gerade bei derartigen Situationen in die freie Parklücke einparken zu können, ist die Erfindung besonders vorteilhaft. Aufgrund der üblichen Ausmaße und möglichen Einschlagwinkel von lenkbaren Rädern des Fahrzeugs gerade in einem Umfeld mit den genannten Bereichsbegrenzungen ist es besonders wichtig im Hinblick auf einen kollisionsfreien Parkvorgang die Parkbahn diesbezüglich entsprechend anpassen zu können. Zum einen durch einen mehrzügigen Parkvorgang zum anderen durch das Anpassen zumindest eines Zuges, während dem ein autonomer Lenkeingriff durchgeführt wird und dieser Zug in Abhängigkeit dieser spezifisch genannten parklückenexternen und die Parklücke nicht direkt begrenzenden Hindernisse zu bestimmen, ermöglicht auch diesbezüglich einen kollisionsfreien Einparkund Ausparkvorgang durchzuführen.

Vorzugsweise ist für das Verfahren vorgesehen, dass das den Parkvorgang durchführende Fahrzeug bei einem Einparkvorgang vor dem Starten des Parkvorgangs mit einer Längsrichtung in einem Winkel, insbesondere größer 40° und kleiner 130°, zu einer Längsrichtung der Parklücke positioniert wird und der Parkvorgang in drei Zügen durchgeführt wird.

Vorzugsweise ist bei einer derartigen Ausgangssituation der zweite bzw. vorzugsweise insbesondere zumindest der zweite Zug und der dritte Zug mit einem autonomen Lenkeingriff durchfahren, wobei beim zweiten Zug die lenkbaren Räder des Fahrzeugs in eine erste Richtung eingeschlagen werden und beim dritten Zug die lenkbaren Räder in eine zur ersten Richtung entgegengesetzte zweite Richtung eingeschlagen werden. Es wird somit abhängig von den Umgebungsbedingungen vorgesehen, dass der zweite und/oder der dritte Zug abhängig von den Umgebungsbedingungen in ihren Längen und ihren Bahngeometrie bestimmt werden.

Vorzugsweise wird der erste Zug dieser dreizügigen Parkbahn ebenfalls mit einem autonomen Lenkeingriff durchfahren. Dieser erste Zug kann auch geradlinig gefahren werden. Es kann bei einem geradlinigen Befahren auch vorgesehen sein, dass dann mit einer aktiven Lenkung dies durchgeführt wird. Ebenfalls kann vorgesehen sein, dass bei einer derartig spezifischen Situation der erste Zug nicht durch einen autonomen Lenkeingriff erfolgt, sondern fahrerabhängig durchfahren wird. Ein autonomer Lenkeingriff ist bei einem derartig geradlinigen Befahren nämlich nicht erforderlich und auch nicht vorgesehen.

Es ist vorzugsweise vorgesehen, dass auch der erste Zug rückwärts und zumindest teilweise nicht-geradlinig gefahren wird, wobei dann insbesondere auch hier ein Befahren mit einem autonomen Lenkeingriff durchgeführt wird. Bei einer derartigen Ausgestaltung wird das Durchfahren der dreizügigen Parkbahn vollständig mit einem autonomen Lenkeingriff durchgeführt.

Insbesondere kann vorgesehen sein, dass auf den ersten Zug nachfolgende weitere Züge, nämlich der zweite Zug und/oder der dritte Zug, abhängig vom ersten Zug, insbesondere von dessen Länge und dessen Bahngeometrie bestimmt werden. Auch diesbezüglich können somit unterschiedliche Gegebenheiten in die Bestimmung der einzelnen Züge der Parkbahn einfließen, wobei sehr präzise und situationsindividuell die geeignetste Parkbahn ermittelt werden kann. Auch bei sehr beengten Verhältnissen kann somit ein Parkvorgang in eine im Hinblick auf ihre Länge und Breite prinzipiell geeignete Parklücke erfolgen.

Es kann auch vorgesehen sein, dass das Fahrzeug vor dem Starten des Parkvorgangs mit seiner Längsrichtung in einem Winkel, insbesondere größer 40° und kleiner 130°, zu einer Längsrichtung der Parklücke positioniert wird und der Parkvorgang in drei Zügen durchgeführt wird. Vor dem Starten des Parkvorgangs wird eine beim Parkvorgang maximal mögliche Ausscherweite des Fahrzeugs, insbesondere eines Referenzbereichs des Fahrzeugs, bestimmt. Der Parkvorgang bezieht sich dabei auf die Fahrt mit autonomen Lenkeingriff. Sowohl vorher als auch nachher können weitere Bewegungen des Fahrzeugs durch einen fahrerabhängigen Lenkeingriff erfolgen, um beispielsweise das Fahrzeug an die Startposition des Parkvorgangs zu bringen oder nach den drei mit autonomen Lenkeingriff durchgeführten Zügen in die endgültige Parkposition zu bringen. Es kann vorgesehen sein, dass nach dem Ermitteln der Ausscherweite und insbesondere davon abhängig eine geeignete Startposition für den Parkvorgang bestimmt wird und dies dem Fahrer mitgeteilt wird, so dass er sich in diese Position mit dem Fahrzeug begeben kann. So kann beispielsweise erforderlich sein, dass das Fahrzeug ausgehend von der Position, in der die Datenerfassung bezüglich der Parklücke und der Ausscherweite etc erfolgt ist, nicht die geeignetste für das Starten des Parkvorgangs ist. Das System teilt dies mit und es schlägt die Startposition vor und leitet den Fahrer mit dem Fahrzeug dort hin. Beispielsweise kann eine Startposition im Vergleich zur Position des Fahrzeugs bei der Vermessung der Abstände zu den Hindernissen in Fahrtrichtung gesehen weiter vorne besser sein, beispielsweise um einige Meter weiter vorne.

Bei einer derartig situationsspezifischen Ausgestaltung des ersten Zugs wird somit die Startposition des Fahrzeugs quasi verzögert, um das erste Rückwärtsmanöver so flach wie nötig zu planen. Zusätzlich oder anstatt dazu kann auch vorgesehen sein, dass abhängig von der bestimmten maximal zulässigen Ausscherweite beim Durchführen des Parkvorgangs der zweite Zug in seiner Länge minimiert wird, so dass das Fahrzeug minimalen lateralen Platzbedarf in Anspruch nimmt. Es kann auch vorgesehen sein, dass die Länge eines ersten Zugs des Parkvorgangs und/oder die Länge eines zweiten Zugs des Parkvorgangs abhängig von der Ausscherweite bestimmt werden. Neben dem Geometrieverlauf wird somit auch die Länge als weiterer Parameter dieser Züge abhängig von einem derartig vorab bestimmten spezifischen Parameter, nämlich der Ausscherweite, ermittelt.

Im Hinblick auf einen möglichst flachen ersten Zug ist dies im Vergleich zu einem ersten Zug gesehen, bei dem die die Umgebungsbedingungen charakterisierenden parklückenexternen ersten und/oder zweiten Hindernisse nicht vorhanden wären. Im Vergleich zu einer derartig freien Befahrbarkeit ohne dieses erste und/oder zweite Hindernis ist der erste Zug mit derartigen Hindernissen somit mit einem größeren Radius, also einer kleineren Krümmung konzipiert. Darüber hinaus ist der vorzugsweise zweite Zug kürzer und weniger weit nach vorne gezogen als der zweite Zug ohne diese fahrzeugnahen und parklückenexternen ersten und/oder zweiten Hindernisse.

Die maximale Ausscherweite wird vorzugsweise abhängig von einem Abstand zwischen zwei Referenzbereichen von Hindernissen gebildet, welche sich an gegenüberliegenden Seiten der Längsseiten des zu parkenden Fahrzeugs befinden. Die Ausscherweite wird kleiner diesem Abstand bestimmt wobei kleiner insbesondere bedeutet, dass die Ausscherweite minimal kleiner dem Abstand bestimmt wird, so dass eine maximal mögliche Ausnutzung diese Freiraums beim Parken gewährleistet ist und dennoch eine Kollision mit diesen Hindernissen vermieden wird. Die Ausscherweite kann vorzugsweise in einem Intervall zwischen 10 cm und größer 0 cm kleiner sein als der Abstand zwischen den Hindernissen. Die Ausscherweite gibt somit vor dem Parkvorgang insbesondere den seitlich zum Fahrzeug befindlichen Freiraum an, in dem sich das Fahrzeug dann während des Parkvorgangs bewegen kann, ohne zu kollidieren.

Die Ausscherweite ist vorzugsweise eine absolute Ausscherweite, was bedeutet, dass der Abstand zwischen einem die Parklücke begrenzenden Hindernis und einem auf der der Parklücke abgewandten Längsseite des Fahrzeugs ausgebildeten parklückenexternen Hindernis zu Grunde gelegt wird und die Ausscherweite kleiner diesem Abstand ist. Sind diesbezüglich zwei Hindernisse gegenüberliegend angeordnet, so wird der direkte Abstand dazwischen bestimmt und die absolute Ausscherweite kleiner diesem Abstand bestimmt, wobei im Hinblick auf ein kleiner sein auf obige Ausführungen verwiesen wird.

Die Ausscherweite kann auch eine relative Ausscherweite sein, welche sich ausgehend von der tatsächlichen Startposition des Fahrzeugs zu Beginn des Parkvorgangs kleiner einem Abstand zwischen dem Fahrzeug, insbesondere einem spezifischen Bereich des Fahrzeugs, zu einem Hindernis, insbesondere einem parklückenexternen Hindernis, welches sich auf der der Parklücke abgewandten Seite des Fahrzeugs befindet.

Es kann vorgesehen sein, dass abhängig von der Position des Fahrzeugs, insbesondere eines ersten Referenzbereichs des Fahrzeugs, relativ zur Parklücke und/oder relativ zum zweiten Hindernis, und einem Abstand eines der Parklücke abgewandten zweiten Referenzbereichs des Fahrzeugs zu der zweiten Begrenzung der Parklücke eine maximale Ausscherweite des zweiten Referenzbereichs ermittelt wird. Es wird also vor dem Durchführen des Parkvorgangs bestimmt, wieweit dieser zweite Referenzbereich des Fahrzeugs maximal ausscheren darf, um eine Kollision mit einem fahrzeugnahen und parklückenexternen Hindernis beim Durchführen des Parkvorgangs vermeiden zu können.

Der erste Referenzbereich des Fahrzeugs kann durch eine Vielzahl von Punkten am Fahrzeug bestimmt sein. Dessen genaue Position lässt sich anhand der bekannten Fahrzeugdaten, wie Geometriedaten und dergleichen und einer bekannten Position eines oder mehrerer am Fahrzeug angeordneten Sensoren bestimmen. Dem Fahrzeug ist vorzugsweise ein Koordinatensystem zugeordnet in welchen die einzelnen Fahrzeugkomponenten mit ihren Positionen bekannt sind. Dadurch kann der Abstand zwischen zwei oder mehreren Komponenten bestimmt werden und dadurch abhängig von mit den Sensoren am Fahrzeug gemessenen Abständen zu Hindernissen oder dergleichen die Position des Referenzbereichs zu diesen externen Hindernissen etc. bestimmt werden.

Der zweite Referenzbereich wird insbesondere situationsabhängig bestimmt. Dabei wird vorzugsweise die Position des Fahrzeugs relativ zu einem parklückenexternen Hindernis berücksichtigt. Der zweite Referenzbereich des Fahrzeugs befindet sich insbesondere an der Stelle des Fahrzeugs, die im Hinblick auf die gegebene Position des Fahrzeugs vor dem Einparkvorgang und aufgrund des spezifischen durchzuführenden Parkvorgangs die exponierte Stelle im Hinblick auf eine mögliche Kollision mit den parklückenexternen Hindernissen darstellt. So kann beispielsweise vorgesehen sein, dass bei einem rückwärtigen Einparken des Fahrzeugs in eine seitlich des Fahrzeugs befindliche Querparklücke der linke oder rechte vordere Eckbereich des Fahrzeugs diesen zweiten Referenzbereich darstellt.

Vorzugsweise wird bei dieser Ausführung mit einem auf der der Parklücke abgewandten Längsseite des Fahrzeugs in einem ersten Zug des Parkvorgangs eine Bogenbahn gefahren und die Krümmung der Bogenbahn wird abhängig von der vorab bestimmten maximalen Ausscherweite bestimmt. Auch hier wird somit im spezifischen den Umgebungsbedingungen außerhalb der Parklücke Rechnung getragen und ein ganz spezifischer Zug, nämlich der erste Zug, abhängig von einer ganz spezifischen Kenngröße, nämlich der Ausscherweite, bestimmt.

Auch dadurch kann eine besonders individuell und an die gegebene Situation angepasste Geometrie und Länge des ersten Zugs vorgegeben werden.

Bei einer derartig situationsspezifischen Ausgestaltung des ersten Zugs wird somit die Startposition des Fahrzeugs quasi verzögert, um das erste Rückwärtsmanöver so flach wie nötig zu planen. Zusätzlich oder anstatt dazu kann auch vorgesehen sein, dass abhängig von der bestimmten maximal zulässigen Ausscherweite beim Durchführen des Parkvorgangs der zweite Zug in seiner Länge minimiert wird, so dass das Fahrzeug minimalen lateralen Platzbedarf in Anspruch nimmt. Es kann auch vorgesehen sein, dass die Länge eines ersten Zugs des Parkvorgangs und/oder die Länge eines zweiten Zugs des Parkvorgangs abhängig von der Ausscherweite bestimmt werden. Neben dem Geometrieverlauf wird somit auch die Länge als weiterer Parameter dieser Züge abhängig von einem derartig vorab bestimmten spezifischen Parameter, nämlich der Ausscherweite, ermittelt.

Im Hinblick auf einen möglichst flachen ersten Zug ist dies im Vergleich zu einem ersten Zug gesehen, bei dem die die Umgebungsbedingungen charakterisierenden parklückenexternen ersten und/oder zweiten Hindernisse nicht vorhanden wären. Im Vergleich zu einer derartig freien Befahrbarkeit ohne dieses erste und/oder zweite Hindernis ist der erste Zug mit derartigen Hindernissen somit mit einem größeren Radius, also einer kleineren Krümmung konzipiert. Darüber hinaus ist der vorzugsweise zweite Zug kürzer und weniger weit nach vorne gezogen als der zweite Zug ohne diese fahrzeugnahen und parklückenexternen ersten und/oder zweiten Hindernisse.

Das mehrzügige Befahren wird derart durchgeführt, dass bei einem Rückwärtseinparken der erste Zug ein Rückwärtsfahren, der zweite Zug ein Vorwärtsfahren und der dritte Zug wieder ein Rückwärtsfahren des Fahrzeugs darstellt.

Insbesondere werden die Umgebungsbedingungen sowie die Kenngrößen der Parklücke, insbesondere deren Tiefe und deren Breite, sowie die Position des Fahrzeugs relativ zur Parklücke sowohl vor als auch während des Parkvorgangs durch geeignete Sensoren des Parkassistenzsystems erfasst. Insbesondere sind diesbezüglich Ultraschallsensoren vorgesehen, die sowohl zur Erfassung eines vor dem Fahrzeug befindlichen Umfelds als auch zur Erfassung eines hinter dem Fahrzeug befindlichen Umfelds als auch zur Erfassung von seitlich dem Fahrzeug befindlichen Umfelds ausgebildet sind. Das Fahrzeug kann diesbezüglich Entfernungssensoren aufweisen, die die Entfernung von Hindernissen zum Fahrzeug erfassen können. Darüber hinaus kann das Fahrzeug Wegsensoren umfassen, mittels denen der auf einer Parkbahn zurückgelegte Weg bestimmt werden kann. Darüber hinaus kann das Fahrzeug einen oder mehrere Lenkwinkelsensoren und/oder einen oder mehrere Gierratensensoren oder dergleichen aufweisen. Durch diese Sensoren können dann die Informationen über die Parklücke, die Informationen über die Position des Fahrzeugs zur Parklücke vor dem Parkvorgang und auch während des Parkvorgangs, als auch die Position des Fahrzeugs relativ zu den die Parklücke begrenzenden Hindernissen als auch zu parklückenexternen Hindernissen erhalten und bestimmt werden.

Insbesondere ist auch vorgesehen, dass die bestimmte Parkbahn mit ihren mehreren Zügen gegebenenfalls während dem Durchführen des Parkvorgangs abgeändert werden kann. Zumindest eine Plausibilisierung dieser vorab bestimmten Parkbahn wird während des Durchfahrens der Parkbahn durchgeführt. Wenn sich Abweichungen der Ist-Bedingungen von den Soll-Bedingungen ergeben, die größer als ein vorgebbarer Toleranzbereich sind, können aufgrund der während des Parkvorgangs vorzugsweise permanent weiterhin erfassten Bedingungen betreffend die Position des Fahrzeugs relativ zur Parklücke etc. Korrekturen der Parkbahn durchgeführt werden.

Des Weiteren betrifft die Erfindung ein Parkassistenzsystem zum Durchführen eines zumindest teilweise semi-autonomen Parkvorgangs eines Fahrzeugs. Das Parkassistenzsystem umfasst eine Detektorvorrichtung, mittels welcher Umgebungsbedingungen des Fahrzeugs bei einer Vorbeifahrt an einer potentiellen Parklücke, insbesondere vor dem Durchführen des Parkvorgangs, erfasst werden, und eine Parkbahn abhängig von von den Umgebungsbedingungen umfassten parklückenexternen und die Parklücke nicht direkt begrenzenden Hindernissen, die als fahrzeugnah erkannt werden, und der Parklücke mittels einer Steuer- und Auswerteeinheit des Parkassistenzsystems bestimmt werden. Der Parkvorgang ist aus mehreren Zügen ausgebildet und zumindest einen mit einem durch das Parkassistenzsystem durchgeführten autonomen Lenkeingriff auf eine Lenkvorrichtung des Fahrzeugs durchfahrener Zug ist in seinem Verlauf abhängig von den Umgebungsbedingungen bestimmt. Der Verlauf umfasst diesbezüglich sowohl die Länge als auch die Geometrie des Zugs.

Die Detektorvorrichtung des Parkassistenzsystems umfasst insbesondere eine Mehrzahl von Sensoren, mittels welcher die Umgebung des Fahrzeugs, die Position des Fahrzeugs zu Hindernissen in der Umgebung, die Position des Fahrzeugs relativ zu einer Parklücke und zu deren Begrenzungen, sowie Geometriedaten der Parklücke erfassbar sind. In Verbindung mit bekannten und abgespeicherten Fahrzeugdaten, wie Länge, Breite, Achsabstand und dergleichen, können diese Informationen generiert werden. Vorteilhafte Ausführungen des erfindungsgemäßen Verfahrens sind als vorteilhafte Ausführungen des erfindungsgemäßen Parkassistenzsystems bzw. der erfindungsgemäßen Parkassistenzeinrichtung anzusehen. Das Parkassistenzsystem ist insbesondere ein Einparkhilfesystem zum Durchführen von Einparkvorgängen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Insbesondere können somit Merkmale oder Merkmalskombinationen von erläuterten Ausführungsbeispielen miteinander kombiniert werden und dadurch neue Ausführungsbeispiele generiert werden, welche ebenfalls von der Offenbarung mitumfasst sind.

Ausführungsbeispiele der Erfindung werden nachfolgend anhand schematischer Zeichnungen näher erläutert. Es zeigen.
- Fig. 1: eine schematische Draufsicht auf eine erste Parksituation vor dem Einparken;
- Fig. 2: eine Draufsicht auf die Parksituation gemäß Fig. 1 mit dem schematisch gezeigten Parkvorgang;
- Fig. 3: eine schematische Draufsicht auf eine zweite Parksituation vor dem Durchführen des Parkvorgangs; und
- Fig. 4: eine schematische Draufsicht auf die Parksituation gemäß Fig. 3 mit schematisch dargestelltem Parkvorgang.

In den Figuren werden gleiche und funktionsgleiche Elemente mit den gleichen Bezugszeichen versehen.

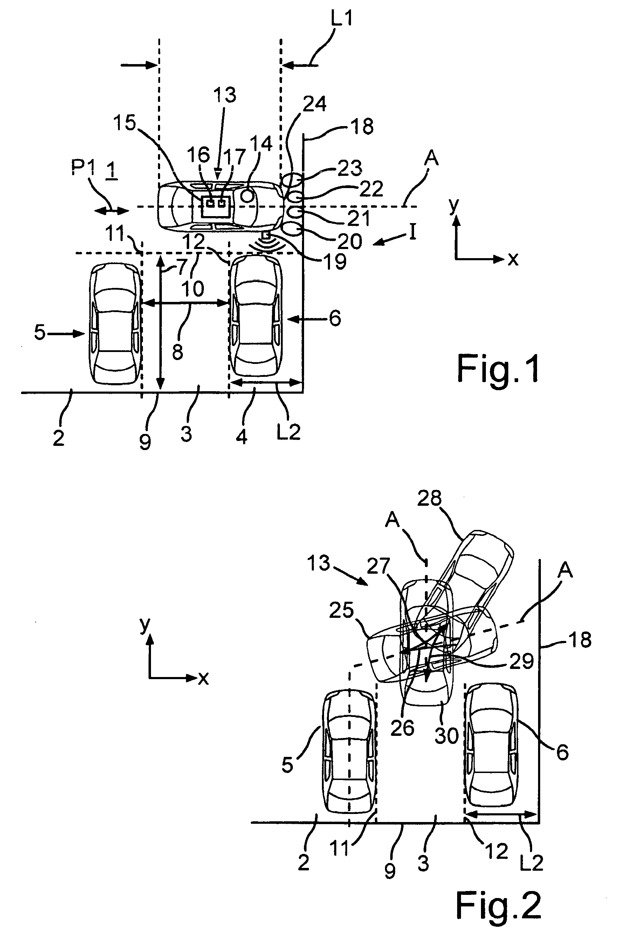

In Fig. 1 ist in einer schematischen Draufsicht eine erste Verkehrssituation I gezeigt. Beispielsweise kann dies in einer Parkgarage oder einer Tiefgarage oder einem freien großflächigen Parkplatz mit mehreren Abstellmöglichkeiten für Fahrzeuge der Fall sein. Dies sind jedoch lediglich beispielhafte Nennungen für eine Verkehrssituation I.

An einer Fahrbahn 1 grenzen unmittelbar eine Mehrzahl von Querparklücken 2, 3 und 4 an. Die Fahrbahn ist in Pfeilrichtung P1 befahrbar und die Längsachse dieser Fahrbahn 1 ist horizontal in x-Richtung orientiert. Die Parklücken 2 bis 4 sind dazu als Querparklücken ausgebildet, was im vorliegenden Fall bedeutet, dass ihre Längsrichtungen bzw. ihre Längsachsen in y-Richtung orientiert sind und somit senkrecht zur Längsachsenorientierung der Fahrbahn 1 sind.

In der Parklücke 2 ist ein erstes Fahrzeug 5 abgestellt, wobei in der Parklücke 4 ein zweites Fahrzeug 6 abgestellt und eingeparkt ist. Die Parklücke 3 ist noch frei und zur Beparkung möglich. Die Parklücke 3 weist eine Tiefe 7 und eine Breite 8 auf. Die Tiefe 7 ist dabei von einer rückwärtigen Begrenzung 9, welche beispielsweise eine Wand ist, bis zur vorderen, beispielsweise auch fiktiven Begrenzung 10 bemessen. Durch die Begrenzung 10 ist die Parklücke 3 von der Fahrbahn 1 getrennt. Die Begrenzung 10 kann durch die Frontseiten der Fahrzeuge 5 und/oder 6 fiktiv gebildet sein. Die Breite 8 erstreckt sich zwischen den Begrenzungen 11 und 12, wobei diesbezüglich die Begrenzungen 11 und 12 lediglich schematisch gezeigt sind. Sie kann in diesem Zusammenhang zwischen den sich zugewandten Längsseiten der Fahrzeuge 5 und 6 bemessen sein, sie kann sich jedoch auch zwischen am Boden eingezeichneten Begrenzungsmarkierungen bemessen.

Ein Fahrzeug 13, welcher ein zweiachsiger und zweispuriger Kraftwagen ist, soll in die Querparklücke 3 eingeparkt werden. Im Ausführungsbeispiel ist vorgesehen, dass ein Rückwärtseinparken in drei Zügen durchgeführt wird, wobei bei allen drei Zügen ein autonomer Lenkeingriff in eine Lenkvorrichtung 14 des Fahrzeugs 13 erfolgt. Dazu umfasst das Fahrzeug 13 eine elektronische Parkassistenzeinrichtung bzw. ein elektronisches Parkassistenzsystem 15, welches eine Steuer- und Auswerteeinheit 16 und eine Speichereinheit 17 aufweist. Des Weiteren umfasst das Fahrzeug 13 eine Mehrzahl von Sensoren, wobei diesbezüglich beispielhaft Entfernungssensoren, Wegsensoren, Lenkwinkelsensoren, Gierratensensoren, etc. genannt sind. Mittels den von zumindest einigen dieser Sensoren detektierten Informationen und den in der Speichereinheit 17 abgespeicherten Fahrzeugdaten, wie beispielsweise Länge, Breite, Radabstand, Achsabstand und Positionen von Sensoren und Komponenten des Fahrzeugs in einem Fahrzeugkoordinatensystem und dergleichen, kann die Position des Fahrzeugs 13 relativ zur Parklücke 3, sowie die Position des Fahrzeugs 13 zu den Begrenzungen 9, 10, 11 und 12 der Parklücke 3, sowie die Position des Fahrzeugs 13 zu weiteren Umgebungsbedingungen des Fahrzeugs bestimmt werden. Insbesondere sind somit bei den weiteren Umgebungsbedingungen parklückenexterne Hindernisse vorgesehen, welche darüber hinaus auch nicht die Parklücke 3 direkt begrenzen. Ein derartiges Hindernis 18 ist beispielsweise in Fig. 1 eine weitere Wand, die die Fahrbahn 1 nach vorne hin begrenzt und in Fahrtrichtung des Fahrzeugs 13 sich quer dazu erstreckt. Das Hindernis 18 ist so hoch, dass es von dem Fahrzeug 13 nicht überfahren werden kann. Neben einer Ausgestaltung als durchgängige hohe Wand, beispielsweise als Wand einer Tiefgarage, kann das Hindernis 18 auch ein oder mehrere Pfosten oder dergleichen sein. Das Hindernis 18 umfasst somit alle möglichen Ausgestaltungen, die ein Überfahren des Fahrzeugs 13 nicht ermöglichen oder dies ohne eine Beschädigung des Fahrzeugs 13 nicht gewährleisten.

Lediglich beispielhaft ist bei der Darstellung in Fig. 1 ein Ultraschallsensor 19 genannt, der rechts vorne und seitlich am Fahrzeug positioniert ist und den seitlichen Bereich um das Fahrzeug 13 erfassen kann, angeordnet. Des Weiteren sind lediglich beispielhaft Erfassungsbereiche 20, 21, 22 und 23 symbolisch dargestellt, welche jeweils einem weiteren Ultraschallsensor an der Frontseite 24 des Fahrzeugs zugeordnet sind, und welche zur Umfelderkennung vor dem Fahrzeug ausgebildet sind. Selbstverständlich sind die Erfassungsbereiche 20 bis 23 auch überlappend und die lediglich symbolische Darstellung soll nicht so verstanden werden, dass dazwischen Bereiche sind, die nicht erfasst werden oder nicht erfasst werden können.

Entsprechende Ausgestaltungen kann das Fahrzeug am Heck aufweisen, sowie entsprechende Sensoren zur seitlichen Umfelderfassung an den beiden gegenüberliegenden Längsseiten des Fahrzeugs 13 aufweisen.

Das Fahrzeug 13 weist eine Länge L1 auf und es ist in der gezeigten Ausführung gemäß Fig. 1 vor dem Starten des Parkvorgangs mit seiner Längsachse A im Wesentlichen parallel zur Längsachse der Fahrbahn 1 positioniert.

Die dem Hindernis 18 zugewandte Begrenzung 12 der Parklücke 3 ist im gezeigten Ausführungsbeispiel dazu in einem Abstand L2 angeordnet. Wie zu erkennen ist, ist dieser Abstand L2 kleiner als die Länge des Fahrzeugs L1. Zum Einparken des Fahrzeugs 13 in die Parklücke 3 ist dieses Hindernis 18 zu berücksichtigen. Die zum Einparken in die Parklücke 3 vorgesehene Parkbahn ist daher von dem Parkassistenzsystem 15 unterschiedlich zu der Bahn zu bestimmen, die vorgesehen und bestimmt werden würde, wenn kein den Einparkvorgang einschränkendes Hindernis 18 parklückenextern vorhanden wäre.

Der Parkvorgang zum Einparken in die Parklücke 3 wird durch das Parkassistenzsystem 15 in mehreren Zügen vorgegeben, so dass die Parkbahn mehrzügig ausgebildet ist. Insbesondere wird dazu ein dreizügiger Parkvorgang vorgegeben. Im Ausführungsbeispiel werden alle drei Züge mit einem autonomen Lenkeingriff in die Lenkvorrichtung 14 durchgeführt, wobei dazu lenkbare Vorderräder des Fahrzeugs 13 über die Steuereinheit 16 und entsprechenden Aktuatoren angesteuert und automatisch betätigt werden.

Zumindest ein Zug der dreizügigen Parkbahn wird abhängig von diesen Umgebungsbedingungen, insbesondere dem Hindernis 18, bestimmt. Bei der Verkehrssituation I gemäß Fig. 1 ist somit der vor dem Fahrzeug 13 zur Verfügung stehende Platz deutlich eingeschränkt, was bei der Bestimmung der Parkbahn zum Einparken in die Parklücke 3 berücksichtigt wird.

Für die Parkbahn werden auch die Informationen über die Parklücke 3, die beim Vorbeifahren des Fahrzeugs 13 an der Parklücke 3 erfasst wurden, berücksichtigt. Darüber hinaus wird die Position des Fahrzeugs 13 zur Parklücke 3 vor dem Durchführen des Parkvorgangs bestimmt und für die Bestimmung der Parkbahn berücksichtigt. Darüber hinaus wird auch die Position des Fahrzeugs 13 zu den Begrenzungen 10, 11 und 12 für die Bestimmung der Parkbahn berücksichtigt, sowie die Position des Fahrzeugs 13 zum Hindernis 18 sowie zu den Fahrzeugen 5 und 6 berücksichtigt. Im in Fig. 1 gezeigten Ausführungsbeispiel ist somit lediglich ein erstes Hindernis 18 parklückenextern und die Parklücke 3 nicht direkt begrenzend vorgesehen, welches jedoch im Hinblick auf den durchzuführenden Parkvorgang fahrzeugnah zum Fahrzeug 13 angeordnet ist und für die Bestimmung der Parkbahn dieses Hindernisses 18 berücksichtigt werden muss. Fahrzeugnah bedeutet insbesondere, dass sich das Hindernis näher als das 1,5-fache, insbesondere nähe dem einfachen, der Länge des zu parkenden Fahrzeugs 13 zur Parklücke befindet.

Das Parkassistenzsystem 15 bestimmt somit abhängig von zumindest einigen der oben genannten Informationen eine dreizügige Parkbahn, welche das Einparken in die Parklücke 3 kollisionsfrei und ohne ein Abbrechen des Parkvorgangs durchführen zu müssen, ermöglicht. Der dreizügige Parkvorgang wird dahingehend durchgeführt, dass ein erster Zug rückwärts gefahren wird, ein sich daran anschließender zweiter Zug vorwärts gefahren wird und ein sich daran wieder anschließender dritter Zug rückwärts gefahren wird.

In Fig. 1 ist die Situation gezeigt, bei dem das Fahrzeug 13 seine stehende Position erreicht hat und an dieser Startposition unmittelbar dann mit dem Parkvorgang beginnt. Dieser ist dann in Fig. 2 in der schematischen Draufsicht näher dargestellt und wird im Weiteren entsprechend erläutert.

Ausgehend von der in Fig. 1 gezeigten Startposition fährt das Fahrzeug 13 rückwärts und erreicht dann die Position 25. Dabei wird der mit dem Pfeil gekennzeichnete erste Zug 26 ausgehend von der in Fig. 1 gezeigten Startposition durchfahren. Der erste Zug 26 wird somit rückwärts mit leichter Bogenbahn mit aktiver Lenkung gefahren, wobei die Länge und die Geometrie des ersten Zugs 26 auch abhängig von der Position des Hindernisses 18 zum Fahrzeug 13 gemäß der in Fig. 1 gezeigten Startposition bestimmt wird. Im Ausführungsbeispiel wird dieser ersten Zug 26 relativ kurz gefahren, so dass sich das Heck des Fahrzeugs 13 noch in x-Richtung betrachtet vor der Position der Längsachse des Fahrzeugs 5 befindet. Ausgehend von dieser erreichten leichten Schrägposition wird dann ein zweiter Zug 27 vorwärts gefahren, bei dem das Fahrzeug 13 an seiner Endposition 28 in Fig. 2 gezeigt ist. Ausgehend von den in im ersten Zug 26 nach rechts eingeschlagenen Rädern wird dann ein automatischer Einschlag der lenkbaren Räder gegenüber der Normal- bzw. Geradstellung nach links durchgeführt und mit diesem Lenkeinschlag dieser zweite Zug 27 gefahren, bis die Endposition 28 am Ende des zweiten Zugs 27 erreicht wird. Ausgehend von dieser Position 28 wird dann ein dritter Zug 29 rückwärts gefahren, bei dem die lenkbaren Räder wieder automatisch im Vergleich zur Normalstellung nach rechts eingeschlagen werden, bis das Fahrzeug die Endposition 30, welche das Ende des dritten Zugs 29 darstellt, erreicht hat. In dieser Endposition 30 ist die Längsachse A des Fahrzeugs 13 parallel oder im Wesentlichen parallel zur Längsachse der Parklücke 3 orientiert. Das Fahrzeug 13 kann dann durch weiteres Rückwärtsfahren in die Endposition in die Parklücke 3 bewegt werden. Durch diese spezifische Parkbahn mit mehreren Zügen wird ein vollständiges Einparken ohne eine Kollision erreicht, wobei aufgrund der situationsspezifischen Bedingungen für den Parkvorgang nach vorne nur minimaler Platz erforderlich ist, und somit den Bedingungen mit dem ersten Hindernis 18 Rechnung getragen wird.

Es sei an dieser Stelle betont, dass mit einer entsprechenden Strategie auch eine Parkbahn bestimmbar ist, welche ein Einparken in die Parklücke 4, wenn diese frei wäre, ausgehend von der in Fig. 1 gezeigten Position des Fahrzeugs 13 möglich wäre.

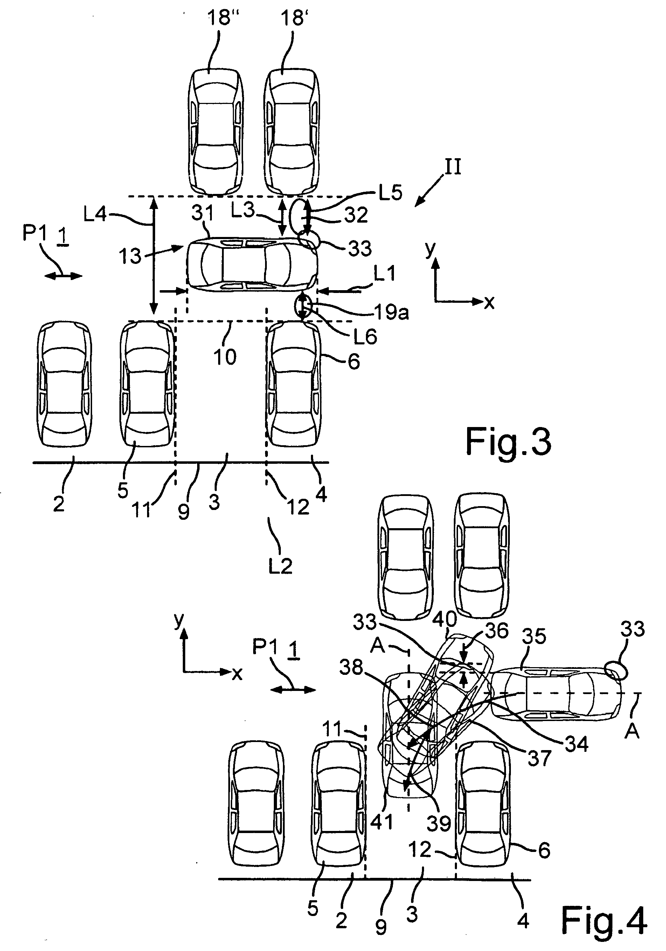

In Fig. 3 ist eine weitere Verkehrssituation II in schematischer Draufsicht gezeigt. Bei dieser Ausgestaltung ist im Unterschied zur Darstellung gemäß Fig. 1 kein Hindernis 18 vorgesehen, welches frontal zum Fahrzeug ausgebildet ist, sondern es sind Hindernisse 18' und 18" vorhanden, die benachbart zu einer der Parklücke 3 abgewandten Längsseite 31 des Fahrzeugs 13 positioniert sind. Im Ausführungsbeispiel sind diese zu der beparkenden Parklücke 3 externen und diese Parklücke 3 nicht direkt begrenzenden Hindernisse 18' und 18" geparkte Fahrzeuge. Auch hier kann jedoch auch beispielsweise eine andere Ausgestaltung beispielsweise in Form einer Wand oder von Pfosten oder dergleichen vorgesehen sein. Die Hindernisse 18' und 18" sind im nahen Umgebungsbereich des Fahrzeugs 13 angeordnet und postiert. In diesem Fall werden diese Hindernisse 18' und 18" durch einen weiteren Entfernungssensor an der linken vorderen Seiten im Bereich des Fahrzeugs 13 detektiert, wobei diesbezüglich lediglich symbolisch der Erfassungsbereich 32 dieses Sensors dargestellt ist. Im Übrigen ist auch ein Erfassungsbereich 19a des rechten vorderen, seitlich detektierenden Sensors 19 gezeigt, mittels welchem die Entfernung des Fahrzeugs 13 zum geparkten Fahrzeug 6 erfasst werden kann. Auch hier sind somit seitlich des Fahrzeugs 13 im fahrzeugnahen Bereich Hindernisse 18' und 18" positioniert, welche im Hinblick auf ihren Abstand zum Fahrzeug 13 bei der Bestimmung der Parkbahn berücksichtigt werden. Auch hier ist ein Abstand L3 kleiner als die Länge L1 des Fahrzeugs 13. Die zum Einparken in die Parklücke 3 zu bestimmende Parkbahn unterscheidet sich bei der Verkehrssituation II gemäß Fig. 3 ebenfalls wiederum von derjenigen, die durch das Parkassistenzsystem 15 bestimmt werden würde, wenn diese Hindernisse 18' und 18" nicht vorhanden wären. Dies bedeutet, dass die Hindernisse 18' und 18" zumindest so nahe zum Fahrzeug 13 sind, dass eine ohne diese Hindernisse 18' und 18" vorgesehene Parkstrategie verändert werden muss.

Auch hier bestimmt das Parkassistenzsystem 15 abhängig von den bereits zu dem in Fig. 1 und 2 erläuterten Ausführungsbeispiel genannten Informationen, eine situationsspezifische Parkbahn. Auch hier wird der Parkvorgang mit einer Parkbahn in drei Zügen durchgeführt, wobei ein Rückwärtseinparken des Fahrzeugs 13 in die Parklücke 3 erfolgt.

Ein Abstand L4 bemisst sich zwischen dem Hindernis 18' und/oder dem Hindernis 18" und dem Fahrzeug 6, insbesondere dem kürzesten Weg dazwischen.

Bei der hier vorgegebenen Verkehrssituation II wird eine beim Durchführen des Parkvorgangs maximal mögliche absolute Ausscherweite ermittelt. Diese wird insbesondere abhängig von den Informationen betreffend die gezeigte Position des Fahrzeugs 13 vor dem Beginn des Parkvorgangs in Fig. 3 ermittelt.

Im Ausführungsbeispiel wird dabei der Abstand zwischen dem Fahrzeug 6 und dem Hindernis 18' bestimmt, wobei dies abhängig von den Abstandsinformationen der vorne seitlich am Fahrzeug 13 angeordneten Sensoren erfolgt. Es wird dabei der Abstand L5 des Fahrzugs 13, insbesondere des Sensors mit dem Erfassungsbereich 32, zum Hindernis 18' und ein Abstand L6 zwischen dem Fahrzeug 13, insbesondere dem Sensor 19, und dem Fahrzeug 6 bestimmt. Da die Breite des Fahrzeugs 13 und insbesondere der Abstand der beiden an gegenüberliegenden Längsseiten des Fahrzeugs 13 angeordneten vorderen Sensoren bekannt ist, kann der Abstand L4 zwischen dem Fahrzeug 6 und dem Hindernis 18' bestimmt werden. Die maximale absolute Ausscherweite ist dann abhängig von diesem Abstand L4 etwas kleiner, insbesondere innerhalb eines Intervalls zwischen 10 cm und größer 0 cm, kleiner..

Abhängig von dieser maximal zulässigen absoluten Ausscherweite wird die Startposition des Fahrzeugs 13 beim Durchführen des Parkvorgangs, insbesondere beim ersten Zug verzögert, um das erste Rückwärtsmanöver bzw. den ersten Zug so flach wie nötig zu planen und/oder einen zweiten Zug im Hinblick auf seine Länge zu minimieren, so dass das Fahrzeug 13 so wenig lateralen Platz, d.h. Platz in Richtung zu den Hindernissen 18' und 18" hin ausgehend von der gezeigten Situation in Fig. 3 in Anspruch nehmen muss. Dieses Verzögern bedeutet, dass das Fahrzeug 13 ausgehend von der Position in Fig. 3 noch eine Strecke nach vorne fahren muss, um die bessere Startposition für den Parkvorgang zu erreichen. Diese Startposition 35 ist dann in Fig. 4 gezeigt. Das Fahren von der Position in Fig. 3 bis zur Startposition 35 wird durch den Fahrer selbst durchgeführt und es erfolgt noch kein autonomer Lenkeingriff, so dass diese Bewegung och nicht zum eigentlichen Parkvorgang, während dem ein autonomer Lenkeingriff bei drei Zügen durchgeführt wird, zählt.

In Fig. 4 ist dann der Einparkvorgang gezeigt, wobei ausgehend von der Darstellung in Fig. 3 die Startposition 35 zum Starten des Parkvorgangs dadurch erreicht wird, dass im Ausführungsbeispiel noch eine gewisse Wegstrecke geradlinig nach vorne gefahren wird. Dies ist in der Darstellung in Fig. 4 gezeigt, bei dem sich das Fahrzeug 13 in etwa noch um eine halbe Fahrzeuglänge nach vorne bewegt hat und die Startposition 35 eingenommen hat. Das Bewegen von der Position in Fig. 3 bis zur Startposition wird dem Fahrer vorzugsweise durch das Parkassistenzsystem 15 mitgeteilt bzw. der Fahrer erhält Anweisungen, wie er in die Startposition 35 gelangt. Dazu kann vorgesehen sein, dass m dies akustisch und/der optisch angezeigt wird und er ggf. Anweisungen erhält, wie weit er zu fahren hat. Wie bereits erwähnt, wird dann ausgehend von dieser Startposition 35 ein erster Zug 34 mit einem autonomen Lenkeingriff durchfahren, wobei die Krümmung dieses ersten Zugs 34 relativ klein und somit der Radius relativ groß ist. Dadurch wird eine sehr flache Bahnbogenkurve durchfahren und damit erreicht, dass ein von der jeweiligen Verkehrssituation bzw. Parksituation abhängender spezifischer Referenzbereich 33 an einer Endposition 37 des ersten Zugs 34 in Richtung der Hindernisse 18' und 18" im Vergleich zur Startposition 35 nur gering um einen Abstand 36 näher gekommen ist. In der gezeigten Ausführung ist der Referenziaereich 33 der linke vordere Eckbereich des Fahrzeugs 13.

Ausgehend von dieser Endposition 37 des ersten Zugs 34 wird dann ein Vorwärtsfahren in einem zweiten Zug 38 durchgeführt, welcher im Vergleich zu dem ersten Zug 34 und einem dritten Zug 39 sehr kurz ist. Im gezeigten Ausführungsbeispiel wird im ersten Zug 34 ein Einschlag der lenkbaren Vorderräder ausgehend von der geraden Normalstellung nach rechts durchgeführt, wobei dann beim zweiten Zug 38 die Räder über die Normalstellung hinweg nach links eingeschlagen werden. Das Fahrzeug 13 bewegt sich entlang des zweiten Zugs 38 ebenfalls auf einer Bogenbahn und erreicht dann die Endposition 40 am Endes des zweiten Zugs 38. Ausgehend von dieser erreichten Endposition 40 wird dann der dritte Zug 39 in Rückwärtsfahrt durchgeführt, wobei hier dann wieder die lenkbaren Räder automatisch ausgehend von im zweiten Zug 38 nach links eingeschlagener Richtung über die Normalstellung wieder nach rechts eingeschlagen werden und das Fahrzeug 13 am Ende des dritten Zugs 39 eine Endposition 41 erreicht. Auch hier ist an dieser Endposition 41 die Orientierung der Längsachse A des Fahrzeugs 13 im Wesentlichen parallel oder vollständig parallel zur Längsachse A der Parklücke 3 und erstreckt sich somit in y-Richtung.

Abhängig von dieser maximal zulässigen absoluten Ausscherweite wird die Länge und/oder der Verlauf, und somit die Krümmung des ersten Zugs 34 und/oder die Länge und/oder die Krümmung des zweiten Zugs 38 bestimmt. Dadurch kann auch bei dieser Verkehrssituation II ein mehrzügiges Einparken in die Parklücke 3 kollisionsfrei und bei allen Zügen semi-autonom ermöglicht werden. Auch hier muss der Parkvorgang nicht abgebrochen werden, da die kollisionsfreie Gesamtparkbahn vor dem Start des Parkvorgangs bestimmt wird.

## Patentansprüche

1. Verfahren zum Durchführen eines zumindest semi-autonomen Parkvorgangs eines Fahrzeugs (13) mittels eines Parkassistenzsystems (15), bei welchem Umgebungsbedingungen des Fahrzeugs (13) bei einer Vorbeifahrt an einer potenziellen Parklücke (3) erfasst und eine Parkbahn abhängig von den Umgebungsbedingungen und der Parklücke (3) bestimmt wird, wobei die Umgebungsbedingungen zumindest ein parklückenexternes und die Parklücke (3) nicht direkt begrenzendes Hindernis (18, 18', 18") umfassen, das als fahrzeugnah detektiert wird und für die Bestimmung der Parkbahn (3) berücksichtigt wird,
**dadurch gekennzeichnet, dass**
der Parkvorgang in mehreren Zügen (26, 27, 29; 34, 38, 39) durchgeführt wird und zumindest ein mit einem autonomen Lenkeingriff durchfahrener Zug (26, 27, 29; 34, 38, 39) in seinem Verlauf abhängig von dem Hindernis (18, 18', 18") bestimmt wird.

2. Verfahren nach Anspruch 1,
**dadurch gekennzeichnet, dass**
zumindest zwei Züge (26, 27, 29; 34, 38, 39) mit einem autonomen Lenkeingriff in eine Lenkvorrichtung (14) des Fahrzeugs (13) durchfahren werden und zumindest einer der Züge (26, 27, 29; 34, 38, 39) in seinem Verlauf abhängig von dem Hindernis (18, 18', 18") bestimmt wird.

3. Verfahren nach Anspruch 2,
**dadurch gekennzeichnet, dass**
ein mit einem autonomen Lenkeingriff durchfahrener Zug (26, 27, 29; 34, 38, 39) in seinem Verlauf abhängig von dem Hindernis (18, 18', 18") bestimmt wird und ein mit einem autonomen Lenkeingriff durchfahrener weiterer Zug (26, 27, 29; 34, 38, 39) abhängig von dem anderen Zug (26, 27, 29; 34, 38, 39) bestimmt wird.

4. Verfahren nach einem der vorhergehenden Ansprüche,
**dadurch gekennzeichnet, dass**
als Parkvorgang ein Rückwärtseinparken durchgeführt wird.

5. Verfahren nach einem der vorhergehenden Ansprüche,
**dadurch gekennzeichnet, dass**
das Fahrzeug (13) in eine Querparklücke (3) eingeparkt wird.

6. Verfahren nach einem der vorhergehenden Ansprüche,
**dadurch gekennzeichnet, dass**
eine an die Parklücke (3) anschließende Fahrbahn (1) in Fahrtrichtung (P1) durch zumindest ein erstes Hindernis (18) begrenzt wird und/oder auf der der Parklücke (3) abgewandten Längsseite (31) des Fahrzeugs (13) durch zumindest ein zweites Hindernis (18', 18") begrenzt wird.

7. Verfahren nach Anspruch 6,
**dadurch gekennzeichnet, dass**
ein erster Abstand (L2) des ersten Hindernisses (18) zu einer dem ersten Hindernis (18) zugewandten seitlichen Begrenzung (12) der Parklücke (3) kleiner oder gleich dem 1,5-fachen der Länge (L1) des Fahrzeugs (6), insbesondere kleiner der Länge (L1) des Fahrzeugs (13) ist.

8. Verfahren nach Anspruch 6 oder 7,
**dadurch gekennzeichnet, dass**
ein zweiter Abstand (L4) des zweiten Hindernisses (18', 18") zu einer dem zweiten Hindernis (18', 18") zugewandten und die Parklücke (3) von der Fahrbahn (1) trennenden Begrenzung (10) kleiner dem 1,5-fachen der Länge (L1) des Fahrzeugs (13), insbesondere kleiner der Länge (L1) des Fahrzeugs (13) ist.

9. Verfahren nach den Ansprüchen 5 bis 7,
**dadurch gekennzeichnet, dass**
das Fahrzeug (13) vor dem Starten des Parkvorgangs mit seiner Längsrichtung (A) in einem Winkel, insbesondere größer 40° und kleiner 130°, zu einer Längsrichtung der Parklücke (3) positioniert wird und der Parkvorgang in drei Zügen (26, 27, 29; 34, 38, 39) durchgeführt wird.

10. Verfahren nach Anspruch 9,
**dadurch gekennzeichnet, dass**
zumindest der zweite Zug (27, 38) und der dritte Zug (29, 39) mit einem autonomen Lenkeingriff durchfahren werden, wobei beim zweiten Zug (27, 38) die lenkbaren Räder des Fahrzeugs (13) in eine erste Richtung eingeschlagen werden und beim dritten Zug (29, 39) die lenkbaren Räder in eine zur ersten Richtung entgegen gesetzte zweite Richtung eingeschlagen werden.

11. Verfahren nach einem der vorhergehenden Ansprüche,
**dadurch gekennzeichnet, dass**
die Parkbahn so bestimmt wird, dass ein kollisionsfreies Durchführen des Parkvorgangs in drei mit einem autonomen Lenkeingriff durchfahrenen Zügen (26, 27, 29; 34, 38, 39) durchgeführt wird, und insbesondere der Parkvorgang nicht gestartet wird, falls eine kollisionsfreies Parkbahn nicht bestimmt werden kann.

12. Verfahren nach den Ansprüchen 5, 6 und 8,
**dadurch gekennzeichnet, dass**
das Fahrzeug (13) vor dem Starten des Parkvorgangs mit seiner Längsrichtung (A) in einem Winkel, insbesondere größer 40° und kleiner 130°, zu einer Längsrichtung der Parklücke (3) positioniert wird, wobei vor dem Starten des Parkvorgangs eine beim Parkvorgang maximal mögliche Ausscherweite, insbesondere abhängig von einem Abstand (L4) zwischen zwei an gegenüberliegenden Seiten des Fahrzeugs (13) fahrzeugnah detektierten Hindernissen (6, 18', 18"), des Fahrzeugs (13) bestimmt wird.

13. Verfahren nach Anspruch 12,
**dadurch gekennzeichnet, dass**
in einem erster Zug (26, 27, 29; 34, 38, 39) des Parkvorgangs eine Bogenbahn gefahren wird und die Krümmung der Bogenbahn abhängig von der Ausscherweite bestimmt wird.

14. Verfahren nach Anspruch 12 oder 13,
**dadurch gekennzeichnet, dass**
die Länge eines ersten Zugs (26, 34) des Parkvorgangs und/oder die Länge eines zweiten Zugs (27, 38) des Parkvorgangs abhängig von der Ausscherweite bestimmt werden.

15. Parkassistenzsystem zum Durchführen eines zumindest semi-autonomen Parkvorgangs eines Fahrzeugs (13), welches eine Detektorvorrichtung (19, 19a, 20 bis 23; 32, 34) umfasst, mittels welcher Umgebungsbedingungen des Fahrzeugs bei einer Vorbeifahrt an einer potenziellen Parklücke (3) erfasst werden, wobei die Umgebungsbedingungen zumindest ein parklückenexternes und die Parklücke (3) nicht direkt begrenzendes Hindernis (18, 18', 18") umfasst, das als fahrzeugnah detektiert ist, und eine Parkbahn zumindest abhängig von dem Hindernis (18, 18', 18") und der Parklücke (3) mittels einer Steuer- und Auswerteinheit (16) bestimmt wird, **dadurch gekennzeichnet, dass**
der Parkvorgang aus mehreren Zügen (26, 27, 29; 34, 38, 39) ausgebildet ist und zumindest ein mit einem durch das Parkassistenzsystem (15) durchgeführten autonomen Lenkeingriff auf eine Lenkvorrichtung (14) des Fahrzeugs (13) durchfahrener Zug (26, 27, 29; 34, 38, 39) in seinem Verlauf abhängig von dem Hindernis (18, 18', 18") bestimmt ist.

## Claims

1. Method for executing an at least semi-autonomous parking process of a vehicle (13) by means of a parking assistance system (15), in which ambient conditions of the vehicle (13) are sensed as it travels past a potential parking space (3), and a parking path is determined as a function of the ambient conditions and of the parking space (3), wherein the ambient conditions comprise at least one obstacle (18, 18', 18") which is external to the parking space and does not directly bound the parking space (3) and is detected as near to the vehicle and is taken into account in the determination of the parking path (3), **characterized in that**
the parking process is executed in a plurality of manoeuvres (26, 27, 29; 34, 38, 39), and at least one manoeuvre (26, 27, 29; 34, 38, 39) which is executed with an autonomous steering intervention is determined in terms of its profile as a function of the obstacle (18, 18', 18").

2. Method according to Claim 1,
**characterized in that**
at least two manoeuvres (26, 27, 29; 34, 38, 39) are executed with an autonomous steering intervention in a steering device (14) of the vehicle (13), and at least one of the manoeuvres (26, 27, 29; 34, 38, 39) is determined in terms of its profile as a function of the obstacle (18, 18', 18'').

3. Method according to Claim 2,
**characterized in that**
a manoeuvre (26, 27, 29; 34, 38, 39) which is executed with an autonomous steering intervention is determined in terms of its profile as a function of the obstacle (18, 18', 18"), and a further manoeuvre (26, 27, 29; 34, 38, 39) which is executed with an autonomous steering intervention is determined as a function of the other manoeuvre (26, 27, 29; 34, 38, 39).

4. Method according to one of the preceding claims, **characterized in that**
reverse parking is executed as a parking process.

5. Method according to one of the preceding claims, **characterized in that**
the vehicle (13) is parked into a transverse parking space (3).

6. Method according to one of the preceding claims, **characterized in that**
a carriageway (1) which adjoins the parking space (3) is bounded in the driving direction (P1) by at least one first obstacle (18) and/or is bounded on the longitudinal side (31) of the vehicle (13) facing away from the parking space (3) by at least one second obstacle (18', 18'').

7. Method according to Claim 6,
**characterized in that**
a first distance (L2) of the first obstacle (18) from a lateral boundary (12) of the parking space (3) which faces the first obstacle (18) is less than or equal to 1.5 times the length (L1) of the vehicle (6), in particular less than the length (L1) of the vehicle (13).

8. Method according to Claim 6 or 7,
**characterized in that**
a second distance (L4) of the second obstacle (18', 18") from a boundary (10) which faces the second obstacle (18', 18'') and separates the parking space (3) from the carriageway (1) is less than 1.5 times the length (L1) of the vehicle (13), in particular less than the length (L1) of the vehicle (13).

9. Method according to Claims 5 to 7, **characterized in that**,
before the parking process starts, the vehicle (13) is positioned with its longitudinal direction (A) at an angle which is, in particular, larger than 40° and smaller than 130°, with respect to a longitudinal direction of the parking space (3), and the parking process is executed in three manoeuvres (26, 27, 29; 34, 38, 39).

10. Method according to Claim 9,
**characterized in that**
at least the second manoeuvre (27, 38) and the third manoeuvre (29, 39) are executed with an autonomous steering intervention, wherein during the second manoeuvre (27, 38) the steerable wheels of the vehicle (13) are locked in a first direction, and during the third manoeuvre (29, 39) the steerable wheels are locked in a second direction which is opposed to the first direction.

11. Method according to one of the preceding claims, **characterized in that**
the parking path is determined in such a way that the parking process is executed in a collision-free fashion in three manoeuvres (26, 27, 29; 34, 38, 39) which are executed with an autonomous steering intervention, and in particular the parking process is not started if a collision-free parking path cannot be determined.

12. Method according to Claims 5, 6 and 8, **characterized in that**,
before the parking process starts, the vehicle (13) is positioned with its longitudinal direction (A) at an angle which is, in particular, larger than 40° and smaller than 130°, with respect to a longitudinal direction of the parking space (3), wherein before the parking process starts a maximum possible veering out distance during the parking process is determined, in particular as a function of a distance (L4) between two obstacles (6, 18', 18'') of the vehicle (13) which are detected near to the vehicle on opposite sides of the vehicle (13).

13. Method according to Claim 12,
**characterized in that**
in a first manoeuvre (26, 27, 29; 34, 38, 39) of the parking process an arcuate path is travelled along and the curvature of the arcuate path is determined as a function of the veering out distance.

14. Method according to Claim 12 or 13,
**characterized in that**
the length of a first manoeuvre (26, 34) of the parking process and/or the length of a second manoeuvre (27, 38) of the parking process are determined as a function of the veering out distance.

15. Parking assistance system for executing an at least semi-autonomous parking process of a vehicle (13), which comprises a detector device (19, 19a, 20 to 23; 32, 34) by means of which ambient conditions of the vehicle are sensed as it travels past a potential parking space (3), wherein the ambient conditions comprise at least one obstacle (18, 18', 18'') which is external to the parking space, does not directly bound the parking space (3) and is detected as being near to the vehicle, and a parking path is determined at least as a function of the obstacle (18, 18', 18'') and of the parking space (3) by means of a control and evaluation unit (16),
**characterized in that**
the parking process is formed from a plurality of manoeuvres (26, 27, 29; 34, 38, 39), and at least one manoeuvre (26, 27, 29; 34, 38, 39) which is executed with an autonomous steering intervention, executed by the parking assistance system (15), onto a steering device (14) of the vehicle (13) is determined in terms of its profile as a function of the obstacle (18, 18', 18'').

## Revendications

1. Procédé pour exécuter une procédure de stationnement au moins semi-automatique pour un véhicule (13) à l'aide d'un système d'aide au stationnement (15), dans lequel les conditions environnementales du véhicule (13) sont détectées au niveau d'une potentielle place de stationnement (3) en situation de conduite en marche avant et dans lequel une trajectoire de stationnement est définie en fonction des conditions environnementales et de la place de stationnement (3), les conditions environnementales comprenant au moins un obstacle (18, 18', 18'') externe à la place de stationnement et ne délimitant pas directement la place de stationnement (3), ledit obstacle étant détecté comme proche du véhicule et pris en compte dans la détermination de la trajectoire de stationnement (3), **caractérisé en ce que** la procédure de stationnement est exécutée en plusieurs manoeuvres (26, 27, 29 ; 34, 38, 39) et que la trajectoire d'au moins une manoeuvre (26, 27, 29 ; 34, 38, 39) réalisée par intervention du pilotage automatique est définie en fonction de l'obstacle (18, 18', 18'').

2. Procédé selon la revendication 1, **caractérisé en ce qu'**au moins deux manoeuvres (26, 27, 29 ; 34, 38, 39) sont exécutées avec une intervention de pilotage automatique dans un dispositif de direction (14) du véhicule (13) et qu'au moins la trajectoire d'une des manoeuvres (26, 27, 29 ; 34, 38, 39) est définie en fonction de l'obstacle (18, 18', 18'').

3. Procédé selon la revendication 2, **caractérisé en ce qu'**une trajectoire de manoeuvre (26, 27, 29 ; 34, 38, 39) exécutée avec une intervention de pilotage automatique est définie en fonction de l'obstacle (18, 18', 18'') et qu'une manoeuvre (26, 27, 29 ; 34, 38, 39) supplémentaire exécutée avec une intervention de pilotage automatique est définie en fonction de la manoeuvre (26, 27, 29 ; 34, 38, 39) supplémentaire.

4. Procédé selon l'une quelconque des revendications précédentes, **caractérisé en ce que** la procédure de stationnement prend la forme d'un stationnement en marche arrière.

5. Procédé selon l'une quelconque des revendications précédentes, **caractérisé en ce que** le véhicule (13) est garé dans une place de stationnement en épi (3).

6. Procédé selon l'une quelconque des revendications précédentes, **caractérisé en ce qu'**une trajectoire de conduite (1) connexe à la place de stationnement (3) est délimitée dans la direction de conduite (P1) par au moins un premier obstacle (18) et/ou est délimitée sur le côté longitudinal (31) du véhicule (13) opposé à la place de stationnement (3) par au moins un deuxième obstacle (18', 18").

7. Procédé selon la revendication 6, **caractérisé en ce qu'**une première distance (L2) du premier obstacle (18) par rapport à une délimitation latérale (12), orientée vers le premier obstacle (18), de la place de stationnement (3) est inférieure ou égale à 1,5 fois la longueur (L1) du véhicule (6), notamment inférieure à la longueur (L1) du véhicule (13).

8. Procédé selon la revendication 6 ou 7, **caractérisé en ce qu'**une deuxième distance (L4) du deuxième obstacle (18', 18'') par rapport à une délimitation (10) orientée vers un deuxième obstacle (18', 18'') et séparant la place de stationnement (3) de la trajectoire de conduite (1) est inférieure à 1,5 fois la longueur (L1) du véhicule (13), notamment inférieure à la longueur (L1) du véhicule (13).

9. Procédé selon les revendications 5 à 7, **caractérisé en ce qu'**avant le début de la procédure de stationnement, le véhicule (13) est positionné avec sa direction longitudinale (A) présentant un certain angle, notamment supérieur à 40° et inférieur à 130°, par rapport à une direction longitudinale de la place de stationnement (3) et que la procédure de stationnement est exécutée en trois manoeuvres (26, 27, 29 ; 34, 38, 39).

10. Procédé selon la revendication 9, **caractérisé en ce qu'**au moins la deuxième manoeuvre (27, 38) et la troisième manoeuvre (29, 39) sont exécutées avec une intervention de pilotage automatique, les roues motrices du véhicule (13) étant placées dans une première direction lors de la deuxième manoeuvre (27, 38) et les roues motrices étant placées dans une deuxième direction opposée à la première direction lors de la troisième manoeuvre (29, 39).

11. Procédé selon l'une quelconque des revendications précédentes, **caractérisé en ce que** la trajectoire de stationnement est définie de telle sorte qu'une exécution sans collision de la procédure de stationnement est exécutée en trois manoeuvres (26, 27, 29 ; 34, 38, 39) automatiques exécutées avec une intervention de pilotage et notamment que la procédure de stationnement n'est pas démarrée si une trajectoire de stationnement sans collision ne peut pas être définie.

12. Procédé selon les revendications 5, 6 et 8, **caractérisé en ce que** le véhicule (13) est positionné, avant le début de la procédure de stationnement, avec sa direction longitudinale (A) placée selon un certain angle, notamment supérieur à 40° et inférieur à 130°, par rapport à une direction longitudinale de la place de stationnement (3), une marge de manoeuvre maximale possible lors de la procédure de stationnement étant déterminée avant le début de la procédure de stationnement, notamment en fonction d'une distance (L4) observée entre deux obstacles (6, 18', 18'') par rapport au véhicule (13) détectés à proximité du véhicule au niveau des côtés opposés du véhicule (13).

13. Procédé selon la revendication 12, **caractérisé en ce qu'**une trajectoire en arc est parcourue lors d'une première manoeuvre (26, 27, 29 ; 34, 38, 39) de la procédure de stationnement et que la courbure de la trajectoire en arc est définie en fonction de la marge de manoeuvre.

14. Procédé selon la revendication 12 ou 13, **caractérisé en ce que** la longueur d'une première manoeuvre (26, 34) de la procédure de stationnement et/ou la longueur d'une deuxième manoeuvre (27, 38) de la procédure de stationnement sont définis en fonction de la marge de manoeuvre.

15. Système d'aide au stationnement pour exécuter une procédure de stationnement au moins semi-automatique pour un véhicule (13), comportant un dispositif de détection (19, 19a, 20 à 23 ; 32, 34) à l'aide duquel les conditions environnementales du véhicule sont détectées en situation de conduite en marche avant au niveau d'une potentielle place de stationnement (3), les conditions environnementales comprenant au moins un obstacle (18, 18', 18'') externe à la place de stationnement et ne délimitant pas directement la place de stationnement (3), ledit obstacle étant détecté comme proche du véhicule et une trajectoire de stationnement étant définie au moins en fonction de l'obstacle (18, 18', 18'') et de la place de stationnement (3) à l'aide d'une unité de commande et d'analyse (16), **caractérisé en ce que** la procédure de stationnement est exécutée en plusieurs manoeuvres (26, 27, 29 ; 34, 38, 39) et qu'au moins la trajectoire d'une manoeuvre (26, 27, 29 ; 34, 38, 39) exécutée à l'aide d'une intervention de pilotage automatique sur un dispositif de direction (14) du véhicule (13) réalisée par le biais du système d'aide au stationnement (15) est définie en fonction de l'obstacle (18, 18', 18'').
